# EUROPÄISCHE PATENTSCHRIFT

(11) **EP 0 708 721 B1**
(45) Veröffentlichungstag und Bekanntmachung des Hinweises auf die Patenterteilung: **12.03.1997**
(21) Anmeldenummer: 94921652.7
(22) Anmeldetag: 16.07.1994
(51) Int. Cl.: B60T 8/48, B60T 8/40, F04B 53/10

(54) **HYDRAULISCHE BREMSANLAGE MIT BREMSSCHLUPF- UND ANTRIEBSSCHLUPFREGELUNG**
HYDRAULIC BRAKING SYSTEM WITH SKID AND DRIVE SLIP CONTROL
SYSTEME DE FREINAGE HYDRAULIQUE AVEC REGULATION ANTIBLOCAGE ET ANTIPATINAGE

(30) Priorität: 23.07.1993 DE 4324689; 06.08.1993 DE 4326389
(43) Veröffentlichungstag der Anmeldung: 01.05.1996
(73) Patentinhaber: ITT Automotive Europe GmbH, 60488 Frankfurt (DE)
(72) Erfinder: BECK, Erhard, D-35781 Weilburg (DE); REINARTZ, Hans-Dieter, D-60439 Frankfurt am Main (DE); OTTO, Albrecht, D-63454 Hanau (DE)
(74) Vertreter: Portwich, Peter
(86) Internationale Anmeldenummer: EP9402350
(87) Internationale Veröffentlichungsnummer: WO9503198

(56) Entgegenhaltungen:
- WO-A-81/01176
- WO-A-88/09278
- WO-A-92/05990
- WO-A-92/09464
- WO-A-93/08053
- DE-A- 3 218 960
- DE-A- 3 742 824
- DE-A- 4 027 794
- DE-A- 4 133 391
- DE-C- 3 439 408
- DE-C- 4 009 640
- US-A- 4 875 741
- US-A- 5 207 567
- PATENT ABSTRACTS OF JAPAN vol. 15, no. 89 (M-1088) 4. März 1991 & JP,A,02 305 378 (AKEBONO BRAKE RES. AND DEV. CENTER) 18. Dezember 1990
- DATABASE WPI Section PQ, Week 8217, Derwent Publications Ltd., London, GB; Class Q56, AN 82-E9093E & SU,A,844 817 (BOROZENETS) 7. Juli 1981

## Beschreibung

Die Vorliegende Erfindung betrifft eine hydraulische Bremsanlage der im Oberbegriff des Hauptanspruchs beschriebenen Gattung.

Eine gattungsgemäße Bremsanlage ist aus der DE 34 39 408 C1 bekannt. Die bekannte Bremsanlage arbeitet im Bremsschlupfregelbetrieb nach dem Rückförderprinzip. Die Rückförderpumpe ist selbstansaugend ausgelegt und saugt bei einer Bremsschlupfregelung über ein erstes Saugventil und eine erste Saugleitung aus dem Niederdruckspeicher, während sie zur Antriebsschlupfregelung über ein zweites Saugventil und eine mit einem Umschaltventil versehene zweite Saugleitung über die Bremsleitung und über den Hauptbremszylinder aus dem Druckmittelbehälter ansaugt. Im Vergleich zu anderen Bremsanlagen, bei welchen die beiden Saugleitungen verbunden werden, um über ein gemeinsames Saugventil zur Saugseite der Pumpe zu führen, und bei welchen bei der ersten Saugleitung ein zusätzliches Saugventil angeordnet ist, das verhindert, daß im Niederdruckspeicher Unterdruck entstehen kann, hat die Parallelschaltung der Saugventile den Vorteil, daß sowohl bei einer Bremsschlupfregelung als auch bei einer Antriebsschlupfregelung jeweils nur ein Saugventil überwunden werden muß. Dadurch werden Drosseleffekte vermindert, so daß die Förderleistung der Pumpe verbessert ist.

Eine derartige Pumpe ist beispielsweise aus der DE 40 27 794 A1 bekannt. Die beschriebene Pumpe ist als Radialkolbenpumpe gestaltet und besitzt einen Förderkolben, an welchem der Ventilsitz für das Saugventil angeformt ist. Das Schließglied des Saugventils wird von einer Ventilfeder beaufschlagt, welche sich gehäusefest abstützt. Bei Verkleinerung der Druckkammer durch eine Kolbenbewegung nimmt die Vorspannung der Ventilfeder zu. Am oberen Totpunkt des Kolbens, wenn also die Druckkammer ihr kleinstes Volumen aufweist, ist die Vorspannung der Ventilfeder demnach am größten, so daß ein gegenüber dem unteren Totpunkt des Kolbens wesentlich erhöhter Öffnungsdruck des Saugventils zu überwinden ist.

Um einen gleichbleibenden Öffnungsdruck des Saugventils zu schaffen, ist verschiedentlich schon vorgeschlagen worden, die Ventilfeder des Saugventils zu fesseln. Aber auch dies entspricht noch nicht der optimalen Förderkennlinie einer solchen Pumpe, wenn sie beispielsweise in einer antriebsschlupfgeregelten Bremsanlage eingesetzt werden soll.

Die Aufgabe der vorliegenden Erfindung besteht darin, eine konstruktiv günstige Ausgestaltung einer gattungsgemäßen Bremsanlage zu schaffen.

Eine weitere Aufgabe der vorliegenden Erfindung besteht darin, eine hydraulische Pumpe zu schaffen, bei welcher der Vordruck des Saugventils in der Nähe des oberen Totpunkts des Förderkolbens kleiner ist als in der Nähe des unteren Totpunkts.

Gelöst wird diese Aufgabe durch die im Hauptanspruch und in den Unteransprüchen angegebenen Maßnahmen.

Durch die Integration beider Saugventile im Pumpengehäuse ist eine einfache Montage möglich, weil in den Saugleitungen nicht noch zusätzliche Ventile eingefügt werden müssen.

Eine besonders günstige räumliche Anordnung ergibt sich, wenn eines der Saugventile sich am verschiebbaren Pumpenkolben befindet, während das andere gehäusefest angeordnet ist.

Dabei ist es von Vorteil, die Saugventile axial gegenüberliegend anzuordnen, da damit die axiale Dimensionierung einer zylindrischen Druckkammer unabhängig von der Lage der Saugventile ist.

Der Unterschied der Vordrücke, welcher zwischen einer Bremsschlupfregelung und einer Antriebsschlupfregelung besteht, kann durch unterschiedliche Auslegung der Öffnungsquerschnitte der Saugventile erfolgen.

Dadurch ist es dann möglich, beide Schließglieder der Saugventile durch eine gemeinsame Druckfeder in Schließrichtung zu beaufschlagen, da die Öffnungsdrücke durch die unterschiedlichen Öffnungsquerschnitte bestimmt sind.

Auch bei der Nutzung einer gemeinsamen Druckfeder für beide Schließglieder kann die Belastung des Schließgliedes des zweiten Saugventils dadurch gemindert werden, daß eine zweite Druckfeder, welche schwächer ausgelegt ist, als die zwischen den Schließgliedern angeordnete Druckfeder, letzterer entgegenwirkt.

Die Wahl von Kugeln als Schließgliedern ergibt gegenüber speziell ausgeformten Schließgliedern eine Kostenersparnis.

Durch eine Hebelanordnung an der Pumpe nach Anspruch 8 wird im Prinzip eine variable Fesselung der Ventilfeder erzielt. In der Nähe des oberen Totpunktes des Förderkolbens wird die Ventilfeder von den Hebelelementen gehalten, so daß ein Ansaugen mit niedrigem Vordruck schon beim Beginn einer Kolbenbewegung aus dem oberen Totpunkt heraus möglich ist. So trägt die gesamte Druckdifferenz zwischen dem Sauganschluß und der Druckkammer zur Beschleunigung des Druckmittels bei, ohne Einbußen durch zu überwindende Ventilvordrücke. In der Nähe des unteren Totpunktes ist die Ventilfeder ohnehin schon weitgehend entspannt, so daß eine weitere Beaufschlagung durch die Hebelelemente unnötig ist.

Bei einer raumsparenden Anordnung der Ventilfeder innerhalb einer den Förderkolben zurückstellenden Druckfeder erweist sich eine Beaufschlagung der Hebelelemente nach Anspruch 9 als besonders vorteilhaft. Dabei kann die veränderliche, vom Hub des Förderkolbens abhängige Kraft entweder von der den Förderkolben rückstellenden Druckfeder oder aber von einem gehäusefesten Anschlag erzeugt werden.

Die Merkmale nach Anspruch 10 ermöglichen einen Einbau der Hebelelemente mit einem Montagevorgang. Durch einstückige Fertigung aller Hebelelemente und der dazwischen angeordneten Verbindungsstücke erübrigt sich eine Vormontage der Hebelanordnung.

Besonders preiswert wird dieses einstückige Übertragungselement als Blechstanzteil ausgeführt.

Es ist vorgesehen, der durch die Ventilfeder ausgeübten Kraft eine weitere Kraft zu überlagern, deren Größe und Richtung in Abhängigkeit von der Geschwindigkeit und/oder der Beschleunigung des Förderkolbens variieren kann und auf diese Weise ein Öffnen des Ventils während des Saughubs erleichtert.

Besonders einfach und kostengünstig kann dies durch ein Reibelement erzielt werden, welches einem gewissen Reibungswiderstand auf das Schließglied ausübt welches somit während des Saughubs eine entgegengesetzt zur Ventilfederkraft gerichtete Kraft erfährt. Das Reibelement kann beispielsweise im Bereich eines das Schließglied führenden Elements angeordnet sein.

Eine zur Geschwindigkeit des Förderkolbens proportionale Zusatzkraft kann erzielt werden, wenn das Schließglied mit einem Körper verbunden ist, der einen großen Strömungswiderstand während der Bewegung vom oberen zum unteren Totpunkt aufweist. Vorteilhafterweise ist dieser Körper in der entgegengesetzten Richtung strömungsgünstiger ausgelegt. Der strömungsungünstige Körper kann einteilig mit dem Schließglied ausgeführt sein.

Eine weitere, einfach realisierbare Maßnahme eine Zusatzkraft auf das Schließglied auszuüben besteht darin, das Schließglied mit einem Trägheitskörper zu verbinden, dessen Masse im Vergleich zur Masse des Schließgliedes groß ist. Dabei kann der Trägheitskörper vorteilhafterweise in dem durch die Baulänge der Ventilschließfeder bedingten Totraum angeordnet werden. Zusätzliches Bauvolumen ist somit nicht erforderlich.

Eine über den gesamten Saughub des Förderkolbens konstante, auf das Schließglied wirkende Vorspannkraft kann erzielt werden, wenn die Masse des Trägheitskörpers auf eine Auslegungsdrehzahl eines die Pumpe antreibenden Motors abgestimmt ist.

Diese Abstimmung erfolgt derart, daß die durch die träge Masse verursachte Kraft und der durch die Kompression der Ventilfeder hervorgerufene variable Anteil an der Federkraft bei vorgegebener Arbeitsdrehzahl so aufeinander abgestimmt werden, daß diese sich aufheben. Bei dieser vorgegebenen Arbeitsdrehzahl kann somit die Förderleistung der Pumpe maximiert werden.

Es versteht sich, daß sich die einzelnen vorgeschlagenen Maßnahmen auch vorteilhaft kombinieren lassen.

Eine nähere Erläuterung des Erfindungsgedankens erfolgt nun durch die Beschreibung bevorzugter Ausführungsbeispiele anhand von Zeichnungen. Es zeigt
- Fig. 1: eine erfindungsgemäße Bremsanlage
- Fig. 2: eine in eine erfindungsgemäße Bremsanlage einfügbare Pumpenanordnung,
- Fig. 3: eine weitere, in eine erfindungsgemäße Bremsanlage einfügbare Pumpe, bei welcher sich der Ventilsitz des Saugventils am Förderkolben befindet,
- Fig. 4: eine weitere, in eine erfindungsgemäße Bremsanlage einfügbare Pumpe mit zwei Saugventilen, jeweils eines am Förderkolben und eines an einem gehäusefesten Verschlußdeckel,
- Fig. 5: Druckkammer einer weiteren, in eine erfindungsgemäße Bremsanlage einfügbaren Pumpe mit Reibelement in geschnittener Darstellung,
- Fig. 6: Druckkammer einer weiteren, in eine erfindungsgemäße Bremsanlage einfügbaren Pumpe mit strömungsungünstigem Körper in geschnittener Darstellung,
- Fig. 7: Druckkamer einer weiteren, in eine erfindungsgemäße Bremsanlage einfügbaren Pumpe mit Trägheitskörper in geschnittener Darstellung.

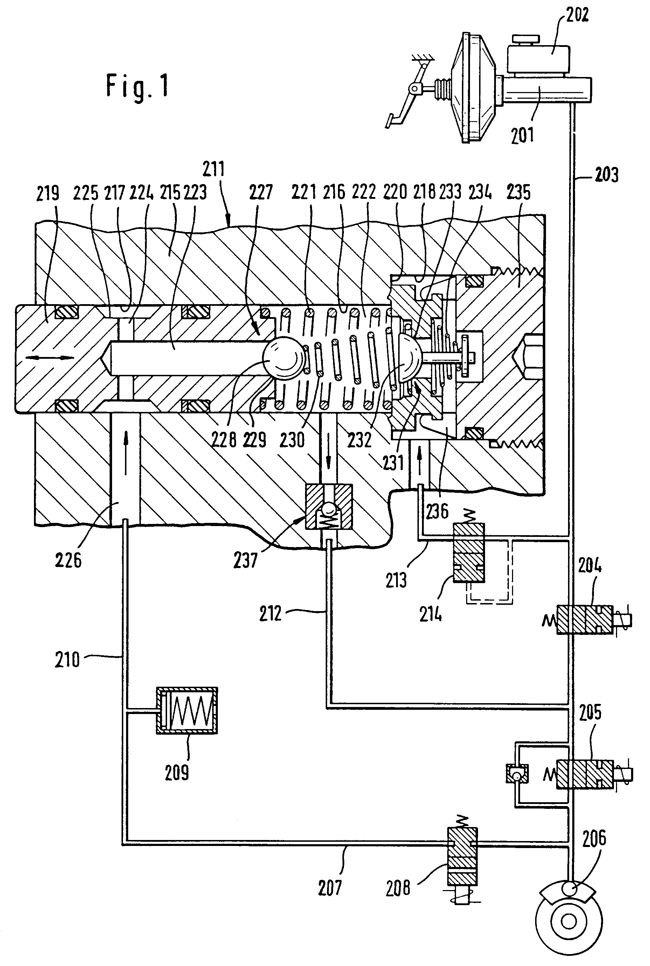

In Figur 1 ist der Hauptbremszylinder 201 an den Druckmittelbehälter 202 angeschlossen. Vom Hauptbremszylinder 201 führt die Bremsleitung 203 über das elektromagnetisch betätigte, stromlos offene Trennventil 204 und das ebenfalls elektromagnetisch betätigte, stromlos offene Einlaßventil 205 zum Radbremszylinder 206 eines angetriebenen Rades. Vom Radbremszylinder 206 verläuft die Rücklaufleitung 207 über das elektromagnetisch betätigte, stromlos geschlossene Auslaßventil 208 zum Niederdruckspeicher 209. Aus diesem wird über die erste Saugleitung 210 von der Pumpe 211 das Druckmittel in die Druckleitung 212 gefördert, welche zwischen dem Trennventil 204 und dem Einlaßventil 205 in die Bremsleitung 208 mündet. Die zweite Saugleitung 213 der Pumpe 211 ist an die Bremsleitung 203 angeschlossen. In die zweite Saugleitung 213 ist ein hydraulisch vom Druck des Hauptbremszylinders 201 betätigtes, drucklos offenes Umschaltventil 214 eingefügt.

Für die Erfindung ist es unwesentlich, ob die Pumpe 211 über die Bremsleitung 203 und den Hauptbremszylinder 201 aus dem Druckmittelbehälter 202 zur Antriebsschlupfregelung das Druckmittel ansaugt oder ob die zweite Saugleitung 213 direkt an den Druckmittelbehälter 202 angeschlossen ist, da der Hauptbremszylinder 201 in unbetätigtem Zustand vom Druckmittel durchströmt werden kann.

Das Gehäuse 215 der Pumpe 211 besitzt eine durchgehende, einfach gestufte Bohrung 216. Im Bohrungsabschnitt 217 kleineren Durchmessers ist der Kolben 219 gegen die Bohrungswand abgedichtet an die Atmosphäre geführt. Der Bohrungsabschnitt 218 größeren Durchmessers ist mit dem Schraubdeckel 235 druckdicht verschlossen. Zwischen dem bohrungsinneren Ende des Kolbens 219 und der Erweiterungsstufe 220 spannt sich die Druckkammer 222 auf, in welcher die Rückstellfeder 221 angeordnet ist. Diese stützt sich am Ventilsitz 233 des zweiten Saugventils 231 ab und beaufschlagt die bohrungsinnere Stirnseite des Kolbens 219 zur Atmosphäre hin. Vom Bohrungsinneren her ist in den Kolben 219 eine axiale Sackbohrung 223 geführt. Diese ist an ihrem Ende durch die Querbohrung 224 mit der umlaufenden Ringnut 225 verbunden, welche zum ersten Sauganschluß 226 führt, der mit dem Niederdruckspeicher 209 verbunden ist. An der Mündung der Sackbohrung 223 in die Druckkammer 222 ist das erste Saugventil 227 angebracht. Der Ventilsitz 229 des ersten Saugventils 227 ist am Kolbenende angeformt, während das Schließglied 228 von der Ventilfeder 230 zum Ventilsitz hin beaufschlagt wird. Diese Ventilfeder 230 stützt sich wie auch die Rückstellfeder 221 am Ventilsitz 233 des zweiten Saugventils ab. Der Ventilsitz 233 des zweiten Saugventils 231 ist durch die Rastnasen 236 formschlüssig mit dem Schraubdeckel 235 verbunden. Von diesem wird er druckmitteldicht gegen die Erweiterungsstufe 220 gedrückt. Zwischen Ventilsitz 233 und Schraubdeckel 235 ist die Ventilfeder 234 des zweiten Saugventils 231 angeordnet. Sie beaufschlagt eine Ringscheibe, welche mit einem am Schließglied 232 des zweiten Saugventils 231 angeformten Stößel verbunden ist.

Die Ventilfeder 234 stützt sich dazu ebenfalls am ventilsitz 233 ab und beaufschlagt die Ringscheibe zum Schraubdeckel 235 hin.

Das Schließglied 232 ist dazu teilkugelförmig gestaltet, wobei der Stößel in der Mitte der kugeligen Fläche angebrachte ist. Radial von der Druckkammer 222 führt eine Verbindung zum Druckventil 237 welches über die Druckleitung 212 an die Bremsleitung 203 zwischen Trennventil 204 und Einlaßventil 205 angeschlossen ist.

Der Vordruck der beiden Saugventile 227 und 231 ist zum einen durch den Durchmesser der Ventilsitze 229 und 233 und zum anderen durch die Federkräfte der Ventilfedern 230 und 234 bestimmt. Dabei hat sich für das erste Saugventil 227 ein Vordruck in Höhe des Atmosphärendruckes oder darüber bewährt, da auf diese Weise ein Druckabfall unter Atmosphärendurck im Niederdruckspeicher 209 sowie im Radbremszylinder 206 unterbunden wird. Für das Saugventil 231 ist eine solche Vorsichtsmaßnahme nicht erforderlich, sondern es soll eine möglichst gute Förderleistung erzielt werden. Der Vordruck dieses zweiten Saugventils 231 liegt daher unter Atmosphärendruck, vorzugsweise bei etwa 0,2 bar.

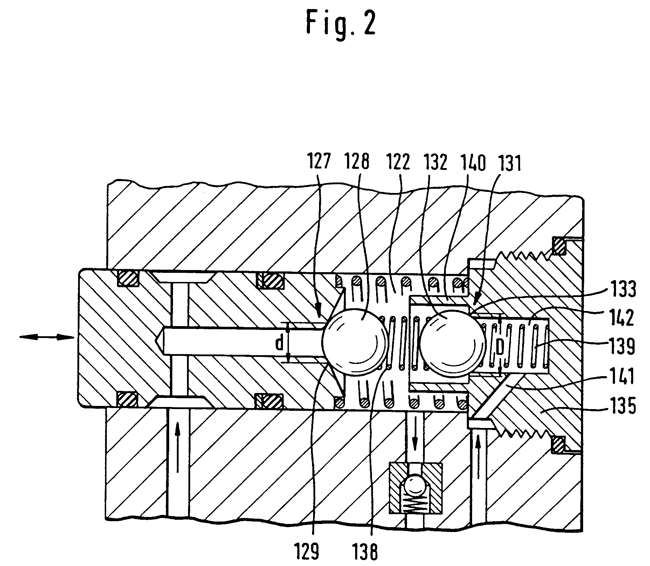

Figur 2 zeigt eine weitere kostengünstige Variante einer Pumpenanordnung, wie sie sich zur Verwendung in einer Bremsanlage nach Figur 1 eignet. Da diese Pumpenanordnung sich in vielen Merkmalen nicht von der nach Figur 1 unterscheidet, werden hier nur die Unterschiede beschrieben. Dabei sind Teile mit gleichen Funktionen wie in Figur 1 mit Bezugszeichen versehen, welche um 100 erniedrigt sind.

Der wichtigste Unterschied zu Figur 1 besteht darin, daß die Schließglieder 128 und 132 des ersten Saugventils 127 und des zweiten Saugventils 131 handelsübliche Metallkugeln sind und von einer gemeinsamen Ventilfeder 138, welche zwischen ihnen angeordnet ist, jeweils in Schließrichtung beaufschlagt sind. Dabei kann die Einstellung der unterschiedlichen Vordrücke allein dadurch erfolgen, daß die Öffnungsquerschnitte unterschiedlich ausgelegt sind. Das bedeutet, daß der Durchmesser d der Berührungslinie des Schließgliedes 128 am Ventilsitz 129 des ersten Saugventils 127 wesentlich keiner ist als der Durchmesser D der Berührungslinie des Schließgliedes 132 am Ventilsitz 133 des zweiten Saugventils 131. Zusätzlich kann eine weitere Druckfeder 139 das Schließglied 132 in Öffnungsrichtung beaufschlagen, so daß die Federkraft der Ventilfeder zum Teil aufgehoben wird. Diese Druckfeder 139 kann sich am Schraubdeckel 135 abstützen. Durch die Anordnung der Ventilfeder 138, welche in der Druckkammer 122 liegt, kann der Ventilsitz 133 des zweiten Saugventils 131 einteilig mit dem Schraubdeckel 135 gefertigt werden. Der Anschluß für die zweite Saugleitung verläuft durch die diagonal in den Schraubdeckel 135 gelegte Schrägbohrung 141 in den Hohlraum 142 im Schraubdeckel 135, welcher durch das zweite Saugventil 131 von der Druckkammer 122 getrennt ist. In diesem Hohlraum 142 ist - falls erforderlich - auch die Druckfeder 139 angeordnet. Aus Stabilitätsgründen ist am Schraubdeckel 135 auf der Seite der Druckkammer 122 ein Führungskörper 140 angebracht, welcher das radiale Spiel des Schließgliedes 132 des zweiten Saugventils 131 begrenzt. Der Führungskörper 140 ist ein Hohlzylinder, der mit dem Schraubdeckel 135 aus einem Teil gefertigt ist.

Durch die einteilige Fertigung von Ventilsitz 133 und Schraubdeckel 135 ergibt sich eine Montagevereinfachung und durch die Verwendung einer gemeinsamen Ventilfeder 138 sowie durch kugelförmige Schließglieder 128 und 132 eine weitere Kosteneinsparung.

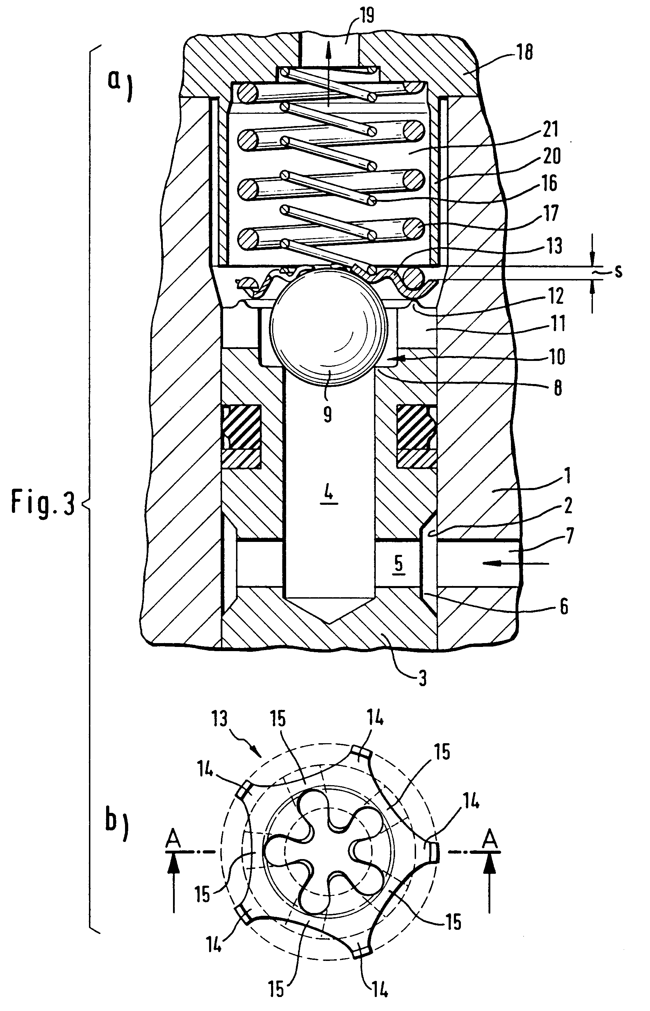

Figur 3 ist in einen Teil a und einen Teil b untergliedert. Teil a zeigt einen Längsschnitt durch eine erfindungsgemäße Pumpe, während Teil b das verwendete Übertragungselement in Draufsicht zeigt.

Die Pumpe nach Figur 3a besitzt im Gehäuse 1 die Gehäusebohrung 2, in welcher der Förderkolben 3 abgedichtet verschiebbar geführt ist. Der Förderkolben 3 weist eine blind endende Längsbohrung 4 auf, an deren Ende er mit einer Querbohrung 5 versehen ist, welche in eine umlaufende Ringnut 6 am Förderkolben 3 mündet. Im Axialbereich der Ringnut 6 ist im Gehäuse 1 ein radialer Sauganschluß angelegt. Am offenen Ende der Längsbohrung 4 ist der Ventilsitz 8 des Saugventils 10 am Förderkolben ausgebildet. Zur radialen Führung des Schließgliedes 9 des Saugventils 10 besitzt der Förderkolben 3 radial außerhalb des Ventilsitzes 8 einen axialen Fortsatz 11. Dieser Fortsatz 11 ist mit radialen Durchbrüchen versehen, um den Druckmittelstrom nicht zu behindern. Außerdem besitzt er einen axialen Anschlagwulst 12, an welchem sich das Übertragungselement 13 abstützt und welcher die Kippachsen der im Übertragungselement 13 enthaltenen Hebelelemente 14 bestimmt.

Wie in Figur 3b zu erkennen ist, wechseln sich am Übertragungselement 13 die Hebelelement 14 mit großer radialer Ausdehnung ab mit den Verbindungsstücken 15, welche nur geringe radiale Abmessungen haben.

Dabei schließen die Verbindungsstücke 15 einen Ring zwischen den Hebelelementen 14. Die Hebelelemente 14 besitzen jeweils eine nach innen ragende und eine nach außen ragende Zunge, deren Enden die Hebelarme bilden. Das Übertragungselement 13 ist vorzugsweise als Ganzes aus einem Blechstanzteil geformt.

Mit den dargestellten gestrichelten Kreisen sind die Anlagelinien der mit dem Übertragungselement in Berührung stehenden Funktionselemente angedeutet. Der Kreis kleinsten Durchmessers zeigt die Anlagelinie der Ventilfeder 16. Der Kreis mittleren Durchmessers wird von der Rückstellfeder 17 beaufschlagt, welche das Übertragungselemenz 13 auf den Anschlagwulst 12 gleichen Durchmessers drückt. Dabei wirkt die Rückstellfeder 17 von derselben axialen Seite auf das Übertragungselement 13 wie die Ventilfeder 16. Als gehäusefester Anschlag für die Ventilfeder 16 und die Rückstellfeder 17 dient das Verschlußstück 18, welches mit einem axialen Druckkanal 19 versehen ist, der zu einem nicht dargestellten Druckventil führt.

An das Verschlußstück 18 ist eine die Rückstellfeder 17 umgebende Anschlaghülse 20 angeformt, welche bei einer Bewegung des Förderkolbens 3 zum Verschlußstück 18 nach Überwindung des Weges s das Übertragungselement 13 an der Berührungslinie größten Durchmessers beaufschlagt. Hierdurch wird die Bewegung der äußeren Zungen der Hebelelemente 14 zum Verschlußstück 18 hin begrenzt, so daß sich das Übertragungselement 13 verformt und die inneren Zungen der Hebelelemente 14 die Ventilfeder 16 zusammendrücken. Das kugelförmige Schließglied 9, welches zwischen dem Ventilsitz 8 und dem Übertragungselement 13 angeordnet ist, wird dadurch von der Kraft der Ventilfeder entlastet.

In der Figur 3a ist der untere Totpunkt dargestellt, der Kolben befindet sich also in seiner tiefsten Position. Das heißt, daß die Druckkammer 21, welche von der Rückstellfeder 17 aufgespannt wird, ihr größtes Volumen hat. Das Übertragungselement 13 ist noch nicht in Kontakt mit der Anschlaghülse 20, so daß die Ventilfeder 16 über das Übertragungselement 13 auf das Schließglied 9 einwirkt und den Öffnungsdruck des Saugventils 10 festlegt. Der Kolbenhub bis zum oberen Totpunkt muß größer bemessen sein als der Abstand s zwischen dem Übertragungselement 13 und der Anschlaghülse 20.

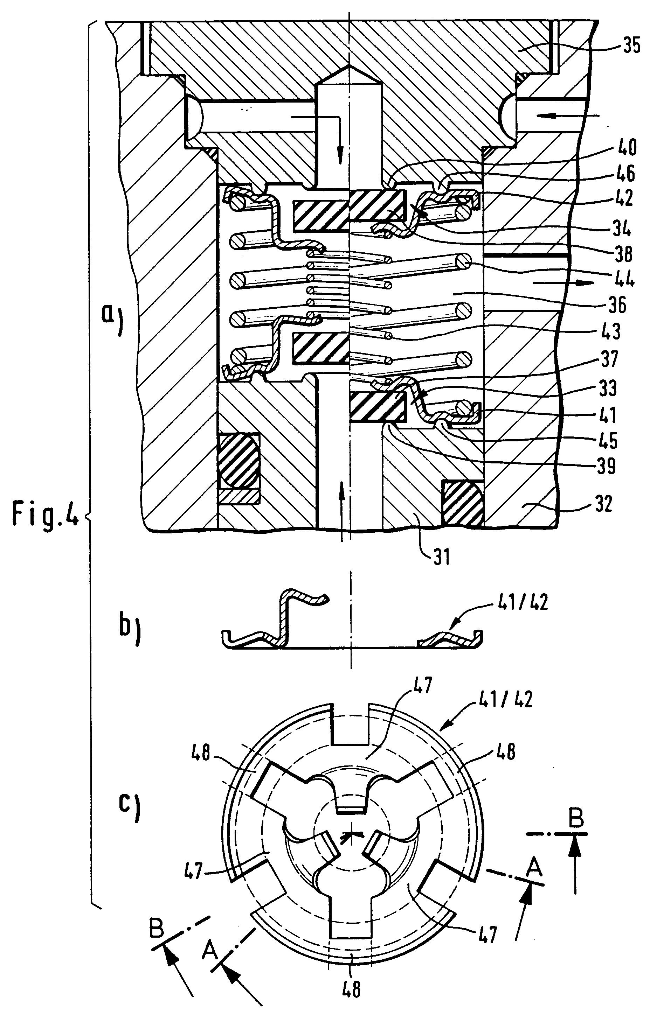

Figur 4 ist in die Teile a, b und c untergliedert. Teil a zeigt einen Teilschnitt durch eine Pumpe, während Teil b und c eins der verwendeten Übertragungselemente darstellen. Die in Figur 4a gezeigte Pumpe besitzt zwei Saugventile 33 und 34 im Gehäuse 32. Sie begrenzen die Druckkammer 36 auf beiden axialen Seiten. Dabei befindet sich das Saugventil 33 am Förderkolben 31, während das Saugventil 34 gehäusefest am Verschlußstück 35 angeordnet ist. Bis auf die Tatsache, daß das Saugventil 33 mit dem Förderkolben 31 bewegt wird, sind beide Saugventile 33 und 34 völlig symmetrisch aufgebaut. Ihre Schließglieder 37 und 38 bestehen jeweils auf elastomeren Scheiben, wobei die Ventilsitze 39 und 40 jeweils von einem am Förderkolben 31 bzw. am Verschlußstück 35 angeformten axialen, ringförmigen Wulst gebildet werden.

Jedem der Schließglieder 37 und 38 ist ein Übertragungselement 41 bzw. 42 zugeordnet. Zwischen den Übertragungselementen 41 und 42 sind die Ventilfeder 43 und die Rückstellfeder 44 angeordnet.

Wie in Figur 1 befindet sich auch hier die Ventilfeder 43 innerhalb der Rückstellfeder 44 und besitzt an den Übertragungselementen 41 und 42 jeweils den kleinsten Anlageradius, wie auch in Figur 4c anhand der gestrichelten Kreise erkennbar ist. Die Rückstellfeder 44 ist hier gegenüber den Anschlagwulsten 45 und 46 radial nach außen versetzt und bildet durch ihre progressive Kennlinie die variable Kraft, welche am oberen Totpunkt des Förderkolbens 31 zur Fesselung der Ventilfeder 43 führt. Die Anschlagwulste 45 und 46 dienen dabei wieder zur Festsetzung der Kippachsen der Übertragungselemente 41 und 42.

Wie die linke Bildhälfte von Figur 4a zeigt, sind am oberen Totpunkt des Förderkolbens 31 die Schließglieder 37 und 38 frei beweglich und werden nur durch einen Überdruck, welcher durch die Auslegung des nicht dargestellten Druckventils bestimmt ist, an ihre Ventilsitze 39 bzw. 40 gedrückt. Sobald sich der Förderkolben 31 auf seinen in der rechten Bildhälfte dargestellten unteren Totpunkt zubewegt, kann also Druckmittel ungehindert in die Druckkammer 36 eindringen. Am unteren Totpunkt des Förderkolbens jedoch übt die Ventilfeder 43 auf die Übertragungselement 41 und 42 ein größeres Hebelmoment aus als die Rückstellfeder 44, so daß die Schließglieder 37 und 38 von der Kraft der Ventilfeder 43 beaufschlagt werden und zum Öffnen der Saugventile 33 und 34 eine gewisse Druckdifferenz erforderlich ist.

Figur 4b zeigt eines der Übertragungselemente 41 und 42 in einer anderen Schnittebene, aus welcher hervorgeht, wie sich die in Figur 4c dargestellten Zungen und Ausnehmungen zum Profil der Übertragungselemente 41 und 42 verhalten.

Das in Figur 2c in Draufsicht gezeigte Übertragungselement 41 oder 42 ist in drei Hebelelemente 47 und drei dazwischen angeordnete Verbindungsstücke 48 unterteilt. Dieses Übertragungselement unterscheidet sich von dem nach Figur 3 dadurch, daß es, wie gesagt, statt der fünf Hebelelemente 14 in Figur 3 nur drei Hebelelemente 47 aufweist. Auch haben diese Hebelelemente 47 eine andere Form.

Den nach innen weisenden Zungen entsprechen keine nach außen weisende Zungen, sondern in diesen Winkelbereichen sind am äußeren Umfang des Übertragungselementes radiale Ausnehmungen vorhanden, welche die Biegbarkeit des Übertragungselementes erhöhen. Dafür erstrecken sich die Hebelelemente 47 jeweils über einen größeren Umfangsbereich, so daß der eigentliche äußere Hebelarm sich auf beiden Seiten der Ausnehmungen am Umfang entlang befindet. Wie in Figur 3 ist das dargestellte Übertragungselement ein geformtes Blechstanzteil.

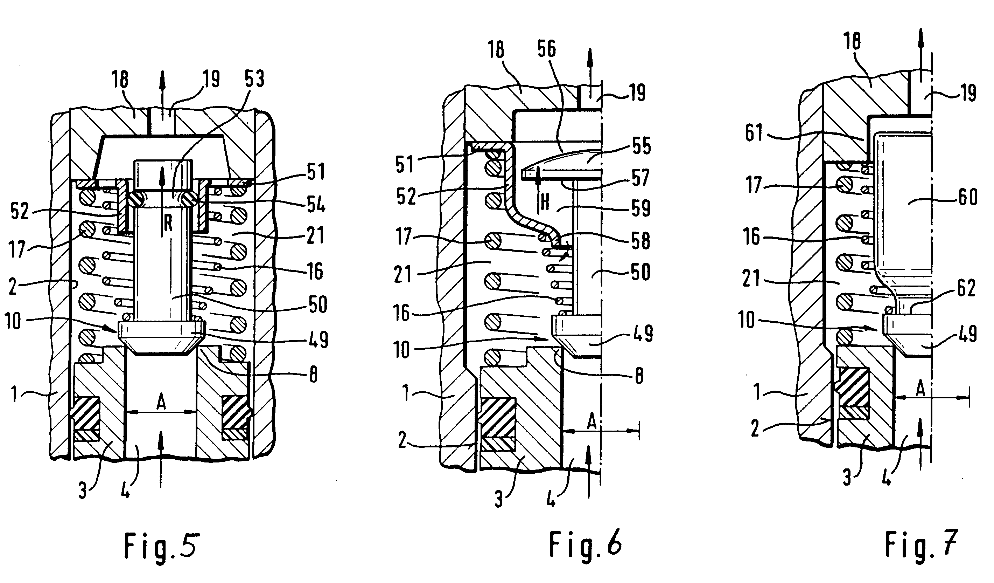

Figur 5 zeigt in geschnittener Darstellung die Druckkammer 21 einer erfindungsgemäßen Pumpe. Im nur teilweise dargestellten Gehäuse 1 der Pumpe befindet sich eine Gehäusebohrung 2 in welcher der Förderkolben 3 abgedichtet verschiebbar geführt ist. Der Förderkolben 3 weist eine Längsbohrung 4 auf, die mit einem nicht dargestellten Sauganschluß der Pumpe in Verbindung steht. Am oberen Ende der Längsbohrung 4 ist der Ventilsitz 8 des Saugventils 10 am Förderkolben 3 ausgebildet. Das Schließglied 49 ist mit einem Fortsatz 50 versehen, der sich in der vom Förderkolben 3 abgewandten Richtung erstreckt. Eine Ventilfeder 16 stützt sich einerseits am Schließglied 49 und andererseits an einem Federteller 51 ab, der einen gehäusefesten Anschlag am Verschlußstück 18 hat. Im Verschlußstück 18 ist ein Druckkanal 19 angeordnet, der über ein nicht dargestelltes Druckventil zur Druckseite der Pumpe führt.

Die Druckkammer 21 wird durch die Gehäusebohrung 2, das Verschlußstück 18 und den Förderkolben 3 begrenzt. Zwischen Förderkolben 3 und Federteller 51 ist eine Rückstellfeder 17 angeordnet, die den Förderkolben 3 in Richtung seines unteren Totpunktes verschiebt.

Der Federteller 51 weist einen zylindrischen Abschnitt 52 auf, in dem der Fortsatz 50 geführt ist. Diese Führung erfolgt über ein in einer Nut 53 des Fortsatzes 50 angeordnetes Reibelement 54. Die axiale Ausdehnung des zylindrischen Abschnittes 52 ist größer als der gesamt Hub des Förderkolbens 3.

Figur 5 zeigt den Förderkolben 3 kurz vor Erreichen des oberen Totpunkts, das heißt kurz vor Ende des Druckhubs. Druckmittel wird durch den Druckkanal 19 in Richtung des Pfeils gefördert. Nach Erreichen des oberen Totpunkts kehrt sich die Bewegungsrichtung des Förderkolbens 3 um, er bewegt sich in der Abbildung nach unten. Dabei bewirkt das Reibelement 54, daß auf das Schließglied 49 eine entgegen der Vorspannung der Ventilfeder 16 gerichtete Reibungskraft R ausgeübt wird. Es ergibt sich somit eine kleinere resultierende Vorspannung. Das Schließglied 49 öffnet somit bereits bei einer zwischen Längsbohrung 4 und Druckkammer 21 herrschenden kleineren Druckdifferenz als ohne Wirkung der Kraft R.

Figur 6 zeigt ein Schließglied 49 mit strömungsungünstigem Körper 55. Dabei ist nur die links der Symmetriachse liegende Hälfte abgebildet, gleiche Bauteile wie zu Figur 5 sind mit gleichen Bezugszeichen versehen. Der strömungsungünstige Körper 55 besitzt die Form eines Kugelabschnitts, dessen gewölbte Fläche 56 in Richtung des Druckkanals 19 angeordnet ist, während seine ebene, einen großen Strömungswiderstand aufweisende rückwärtige Ringfläche 57 dem Förderkolben 3 zugewandt ist. der zylindrische Abschnitt 52 weist einen größeren Durchmesser als in Figur 5 auf, um den Körper 55 aufnehmen zu können.

Er ist mit einer Verjüngung 58 versehen, an der sich die Ventilfeder 16 abstützt.

Während des Saughubs des Förderkolbens 3 staut sich im Bereich 59 unterhalb der Ringfläche 57 Druckmittel auf, wodurch eine hydraulisch hervorgerufenen Kraft H auf dem Körper 55 wirkt, die der Vorspannkraft der Ventilfeder 16 entgegenwirkt und somit ein Öffnen des Saugventils 10 bereits bei geringer Druckdifferenz zwischen Längsbohrung 4 und Druckkammer 21 ermöglicht.

Figur 7 zeigt einen Ausschnitt einer erfindungsgemäßen Pumpe, die ein mit einem Trägheitskörper 60 verbundenes Schließglied 49 aufweist. Auch hier sind gleiche Teile mit gleichen Bezugszeichen wie zu den vorhergehenden Figuren versehen. Auf einen Federteller wurde hier verzichtet, die Rückstellfeder 17 und die Ventilfeder 16 stützen sich direkt am Verschlußstück 18 ab. Der Trägheitskörper 60 wird in einem hohlzylindrischen Abschnitt 61 des Verschlußstückes 18 geführt und weist eine im wesentlichen zylindrische Form auf. Er verjüngt sich zum Schließglied 49 hin, so daß eine Stufe 62 verbleibt, an der sich die Ventilfeder 16 abstützt.

Die Stärke der Ventilfeder 16 ist so bemessen, daß im unteren Totpunkt ein zwischen Längsbohrung 4 und Druckkammer 21 herrschende Druckunterschied von p = 50 ... 100 mbar ausreicht, das Saugventil 10 zu öffnen. Durch die Kompression der Ventilfeder 16 während des Druckhubs erhöht sich die erforderliche Druckdifferenz bis zum Erreichen des oberen Totpunkts.

Die durch die Masse des Trägheitskörpers 60 hervorgerufene Zusatzkraft wirkt der durch die Ventilfeder 16 ausgeübten Kraft entgegen, sie ist am größten im Bereich des oberen Totpunkts und am kleinsten im Bereich des unteren Totpunkts.

Durch geeignete Abstimmung der Masse und der Drehzahl eines den Förderkolben 3 antreibenden Motors kann man den Arbeitspunkt der Pumpe in den Bereich der Resonanz des schwingenden Feder-Masse-Systems bringen, in dem der erforderliche Öffnungsdruck in jedem zwischen oberem und unterem Totpunkt liegenden Punkt minimal ist.

Besonders empfehlenswert ist eine derartige "resonante" Auslegung auf eine hohe Drehzahl knapp unterhalb der Leerlaufdrehzahl des die Pumpe antreibenden Motors, da in diesem Fall bei einer Antriebsschlupfregelung der größte Volumenstrom zum Druckaufbau erforderlich ist.

## Patentansprüche

1. Hydraulische Bremsanlage mit Bremsschlupf- und Antriebsschlupfregelung, mit einem Hauptbremszylinder (201) der an einen Druckmittelbehälter (202) angeschlossen ist, mit mindestens einem Radbremszylinder (206), der zu einem angetriebenen Rad gehört, mit einer Bremsleitung (203) vom Hauptbremszylinder (201) zum Radbremszylinder (206), mit einem Einlaßventil (205) in der Bremsleitung (203), mit einem Niederdruckspeicher (209), mit einer Rücklaufleitung (207) vom Radbremszylinder (206) zum Niederdruckspeicher (209), mit einem Auslaßventil (208) in der Rücklaufleitung (207), mit einer selbstansaugenden Pumpe (211), mit einer Druckkammer (222) in einem Gehäuse (215), mit einem Trennventil (204) in der Bremsleitung (203) zwischen Hauptbremsyzylinder (201) und Einlaßventil (205), mit einer Druckleitung (212) von der Druckkammer (222) zur Bremsleitung (203) zwischen Trennventil (204) und Einlaßventil (205), mit einem Druckventil (237) zwischen Druckkammer (222) und Druckleitung (212), mit einer ersten Saugleitung (210) zwischen Niederdruckspeicher (209) und Druckkammer (222), mit einer zweiten Saugleitung (213) zwischen Druckmittelbehälter (202) und Druckkammer (222), mit einem Umschaltventil (214) in der zweiten Saugleitung (213), mit einem ersten Saugventil (227) zwischen Niederdruckspeicher (209) und der Druckkammer (222) mit einem zweiten Saugventil (231) zwischen dem Umschaltventil (214) und der Druckkammer (222), **dadurch gekennzeichnet, daß** die beiden Saugventile (227, 231) im Pumpengehäuse (215) angeordnet sind.

2. Hydraulische Bremsanlage nach Anspruch 1, **dadurch gekennzeichnet, daß** eines (231, 131) der Saugventile (227, 127; 231, 131) einen gehäusefesten Ventilsitz (233, 133) aufweist und daß andere Saugventil (227, 127) seinen Ventilsitz (229, 129) an einem verschiebbaren Kolben (219) besitzt.

3. Hydraulische Bremsanlage nach Anspruch 1 oder 2, **dadurch gekennzeichnet, daß** die Druckkammer (222, 122) im wesentlichen zylindrisch ist und an ihren axialen Enden von je einem Saugventil (227, 127; 231, 131) begrenzt wird.

4. Hydraulische Bremsanlage nach einem der vorhergehenden Ansprüche, **dadurch gekennzeichnet, daß** das Schließglied (232, 132) des zweiten Saugventils (231, 131) auf einer größeren Fläche (Durchmesser D) vom Druck in der zweiten Saugleitung (213) in Öffnungsrichtung beaufschlagt ist als das Schließglied (228, 128) des zweiten Saugventils (227, 127) vom Druck in der ersten Saugleitung (210).

5. Hydraulische Bremsanlage nach einem der vorhergehenden Ansprüche, **dadurch gekennzeichnet, daß** zwischen den Schließgliedern (128, 132) der beiden Saugventile (127, 131) eine Ventilfeder (138) angeordnet ist, die beide Schließglieder (128, 132) in Schließrichtung beaufschlagt.

6. Hydraulische Bremsanlage nach Anspruch 5, **dadurch gekennzeichnet, daß** das Schließglied (132) des zweiten Saugventils (131) von einer Druckfeder (139) beaufschlagt ist, welche der Ventilfeder (138) entgegenwirkt und schwächer ist als diese.

7. Hydraulische Bremsanlage nach einem der vorhergehenden Ansprüche, **dadurch gekennzeichnet, daß** die Schließglieder (128, 132) beider Saugventile (127, 131) Kugeln sind.

8. Hydraulische Bremsanlage nach einem der vorhergehenden Ansprüche mit einer Pumpe, die ein Gehäuse (1, 32), eine im wesentlichen zylindrische Gehäusebohrung (2), einen darin verschiebbaren Förderkolben (3, 31) und mindestens ein Saugventil (10, 33, 34) mit einem Ventilsitz (8, 39, 40), einem Schließglied (9, 37, 38) und einer Ventilfeder (16, 43) umfaßt, wobei sich die Vorspannung der Ventilfeder (16, 43) abhängig von der Position des Förderkolbens (3, 31) ändert und der Förderkolben (3, 31) eine Druckkammer (21, 36) begrenzt und eine unteren Totpunkt besitzt, bei welchem die Druckkammer (21, 36) ihr größtes Volumen aufweist, sowie einen oberen Totpunkt, bei welchem die Druckkammer (21, 36) ihr kleinstes Volumen aufweist, **dadurch gekennzeichnet, daß** zur Übertragung der Kraft der Ventilfeder (16, 43) auf das Schließglied (9, 37, 38) des Saugventils (10, 33, 34) mehrere, am Umfang verteilte, sich jeweils in radialer Richtung erstreckende Hebelelemente (14, 47) vorhanden sind, deren Kippachse jeweils tangential verläuft und welche in der Nähe des oberen Totpunktes die Ventilfeder (16, 43) komprimieren.

9. Hydraulische Bremsanlage nach Anspruch 8, **dadurch gekennzeichnet, daß** die Hebelelemente (14, 47) - von der Mittelachse der Bohrung (2) gesehen - drei Anlageradien aufweisen, wobei der kleinste Radius von der Ventilfeder (16, 43) beaufschlagt wird, der mittlere an einem starr mit dem Ventilsitz (8, 39, 40) verbundenen Anschlagteil (Anschlagwulst 12, 45) anliegt und die Kippachse bestimmt und wobei der äußere Radius von einer abhängig von der Position des Förderkolbens (3, 31) veränderlichen Kraft beaufschlagt wird, die dem auf die Hebelelemente (14, 47) durch die Ventilfeder (16, 43) ausgeübten Hebelmoment entgegenwirkt.

10. Hydraulische Bremsanlage nach Anspruch 8 oder 9, **dadurch gekennzeichnet, daß** die Hebelelemente (14, 47) über tangential angeordnete Verbindungsstücke (15, 48) miteinander verbunden sind, welche die Abstände der Hebelelemente (14, 47) zueinander am Umfang entlang konstant halten.

11. Hydraulische Bremsanlage nach Anspruch 10, **dadurch gekennzeichnet, daß** die Hebelelemente (14, 47) und die Verbindungsstücke (15, 48) einstückig als ein Übertragungselement (13, 41, 42) gefertigt sind.

12. Hydraulische Bremsanlage nach Anspruch 10, **dadurch gekennzeichnet, daß** das Übertragungselement (13, 41, 42) als ein geformtes Stanzteil aus Blech gefertigt ist.

13. Hydraulische Bremsanlage nach einem der Ansprüche 1 bis 12, mit einer Pumpe, die ein Gehäuse (1), eine im wesentlichen zylindrische Gehäusebohrung (2), einen darin verschiebbaren Förderkolben (3) und mindestens ein Saugventil (10) mit einem Ventilsitz (8), einem Schließglied (49) und einer Ventilfeder (16) umfaßt, wobei sich die Vorspannung der Ventilfeder (16) abhängig von der Position des Förderkolbens (3) ändert und der Förderkolben (3) eine Druckkammer (21) begrenzt und einen unteren Totpunkt besitzt, bei welchem die Druckkammer (21) ihr größtes Volumen aufweist, sowie einen oberen Totpunkt, bei welchem die Druckkammer (21) ihr kleinstes Volumen aufweist, **dadurch gekennzeichnet, daß** Mittel vorgesehen sind, die geeignet sind, eine Kraft auf das Schließglied (49) auszuüben, die der während des Saughubs des Förderkolbens (3) von der Ventilfeder (16) ausgeübten Kraft entgegenwirkt.

14. Hydraulische Bremsanlage nach Anspruch 13, **dadurch gekennzeichnet, daß** diese Mittel durch ein Reibelement (54) gebildet sind, welches zwischen Schließglied (49) und einem nicht mit dem Förderkolben (3) mitbewegten Bauteil (51) angeordnet ist.

15. Hydraulische Bremsanlage nach Anspruch 13, **dadurch gekennzeichnet, daß** diese Mittel durch einen strömungsungünstigen Körper (55) gebildet sind, der mit dem Schließglied (49) verbunden ist.

16. Hydraulische Bremsanlage nach Anspruch 13, **dadurch gekennzeichnet, daß** diese Mittel durch einen mit dem Schließglied (49) verbundenen Trägheitskörper (60) gebildet sind.

17. Hydraulische Bremsanlage nach Anspruch 16, **dadurch gekennzeichnet, daß** die Masse des Trägheitskörpers (60) auf eine Auslegungsdrehzahl eines die Pumpe antreibenden Motors abgestimmt ist.

## Claims

1. Hydraulic brake system with brake slip control and traction slip control, including a master brake cylinder (201) which is connected to a pressure fluid reservoir (202), at least one wheel brake cylinder (206) associated with a driven wheel, a brake line (203) from the master brake cylinder (201) to the wheel brake cylinder (206), an inlet valve (205) in the brake line (203), a low-pressure accumulator (209), a return line (207) from the wheel brake cylinder (206) to the low-pressure accumulator (209), an outlet valve (208) in the return line (207), a self-priming pump (211), a pressure chamber (222) in a housing (215), a cut-off valve (204) in the brake line (203) between the master brake cylinder (201) and the inlet valve (205), a pressure line (212) from the pressure chamber (222) to the brake line (203) between the cut-off valve (204) and the inlet valve (205), a pressure valve (237) between the pressure chamber (222) and the pressure line (212), a first suction line (210) between the low-pressure accumulator (209) and the pressure chamber (222), a second suction line (213) between the pressure fluid reservoir (202) and the pressure chamber (222), a change-over valve (214) in the second suction line (213), a first suction valve (227) between the low-pressure accumulator (209) and the pressure chamber (222), a second suction valve (231) between the change-over valve (214) and the pressure chamber (222),
**characterized** in that the two suction valves (227, 231) are arranged in the pump housing (215).

2. Hydraulic brake system as claimed in claim 1,
**characterized** in that one (231, 131) of the suction valves (227, 127; 231, 131) has a valve seat (233, 133) on the housing, and the other suction valve (227, 127) has its valve seat (229, 129) on a movable piston (219).

3. Hydraulic brake system as claimed in claim 1 or claim 2,
**characterized** in that the pressure chamber (222, 122) is substantially cylindrical and is defined at each axial end by one suction valve (227, 127; 231, 131).

4. Hydraulic brake system as claimed in any one of the preceding claims,
**characterized** in that the closure member (232, 132) of the second suction valve (231, 131) is acted upon in the opening direction by the pressure in the second suction line (213) on a larger surface (diameter D) than the closure member (228, 128) of the second suction valve (227, 127) is acted upon by the pressure in the first suction line (210).

5. Hydraulic brake system as claimed in any one of the preceding claims,
**characterized** in that a valve spring (138) is interposed between the closure members (128, 132) of the two suction valves (127, 131) and acts upon both closure members (128, 132) in the direction so as to close.

6. Hydraulic brake system as claimed in claim 5,
**characterized** in that the closure member (132) of the second suction valve (131) is acted upon by a compression spring (139) which counteracts the valve spring (138) and is weaker than the valve spring.

7. Hydraulic brake system as claimed in any one of the preceding claims,
**characterized** in that the closure members (128, 132) of both suction valves (127, 131) are balls.

8. Hydraulic brake system as claimed in any one of the preceding claims, including a pump comprising a housing (1, 32), a substantially cylindrical housing bore (2), a delivery piston (3, 31) movable in the housing bore and at least one suction valve (10, 33, 34) with a valve seat (8, 39, 40), a closure member (9, 37, 38) and a valve spring (16, 43) having a preload which is variable in response to the position of the delivery piston (3, 31), the delivery piston (3, 31) confining a pressure chamber (21, 36) and having a lower dead center where the pressure chamber (21, 36) has its largest volume, and an upper dead center where the pressure chamber (21, 36) has its smallest volume,
**characterized** in that, for transmitting the force of the valve spring (16, 43) to the closure member (9, 37, 38) of the suction valve (10, 33, 34), a plurality of lever elements (14, 47) are provided which are spread over the periphery and each extend in a radial direction, the tilting axis of the lever elements extending in a tangential direction, and the lever elements compressing the valve spring (16, 43) proximate the upper dead center.

9. Hydraulic brake system as claimed in claim 8,
**characterized** in that the lever elements (14, 47), when viewed from the center axis of the bore (2), have three abutment radii, the smallest radius being acted upon by the valve spring (16, 43), the intermediate radius abutting on a stop part (stop bead 12, 45) that is rigidly connected to the valve seat (8, 39, 40) and defines the tilting axis, and the external radius being acted upon by a force which is variable in response to the position of the delivery piston (3, 31) and counteracts the lever momentum exerted on the lever elements (14, 47) by the valve spring (16, 43).

10. Hydraulic brake system as claimed in claim 8 or 9,
**characterized** in that the lever elements (14, 47) are interconnected by way of tangentially arranged connecting portions (15, 48) which keep the distances between the lever elements (14, 47) constant along the periphery.

11. Hydraulic brake system as claimed in claim 10,
**characterized** in that the lever elements (14, 47) and the connecting portions (15, 48) are formed integrally as one transmitting element (13, 41, 42).

12. Hydraulic brake system as claimed in claim 10,
**characterized** in that the transmitting element (13, 41, 42) is a sheet-metal punched part.

13. Hydraulic brake system as claimed in any one of claims 1 to 12, including a pump comprising a housing (1), a substantially cylindrical housing bore (2), a delivery piston (3) movable in the housing bore and at least one suction valve (10) with a valve seat (8), a closure member (49) and a valve spring (16) having a preload which is variable in response to the position of the delivery piston (3), the delivery piston (3) confining a pressure chamber (21) and having a lower dead center where the pressure chamber (21) has its largest volume, and an upper dead center where the pressure chamber (21) has its smallest volume,
**characterized** in that a means is provided capable of exerting a force on the closure member (49) which counteracts the force that is exerted by the valve spring (16) during the suction stroke of the delivery piston (3).

14. Hydraulic brake system as claimed in claim 13,
**characterized** in that this means is a friction element (54) which is interposed between the closure member (49) and a component (51) which is not moved along with the delivery piston (3).

15. Hydraulic brake system as claimed in claim 13,
**characterized** in that this means is an aerodynamically unfavorable element (55) which is connected to the closure member (49).

16. Hydraulic brake system as claimed in claim 13,
**characterized** in that this means is an inertia member (60) connected to the closure member (49).

17. Hydraulic brake system as claimed in claim 16,
**characterized** in that the mass of the inertia member (60) is conformed to the rating of the rotational speed of a motor driving the pump.

## Revendications

1. Système hydraulique de freinage à régulation du glissement de freinage et régulation du glissement de traction, comprenant un maître-cylindre de frein (201), qui est raccordé à un réservoir d'agent de pression (202), au moins un cylindre de frein de roue (206), qui fait partie d'une roue motrice, une conduite de frein (203) menant du maître-cylindre de frein (201) au cylindre de frein de roue (206), une valve d'entrée (205) disposée dans la conduite de frein (203), un accumulateur à basse pression (209), une conduite de retour (207) menant du cylindre de frein de roue (206) à l'accumulateur à basse pression (209), une valve de sortie (208) disposée dans la conduite de retour (207), une pompe (211) à auto-amorçage, une chambre de refoulement (222) située dans un boîtier (215), une valve d'isolement (204) disposée dans la conduite de frein (203) entre le maître-cylindre de frein (201) et la valve d'entrée (205), une conduite de refoulement (212) menant de la chambre de refoulement (222) à la conduite de frein (203) entre la valve d'isolement (204) et la valve d'entrée (205), une valve de refoulement (237) disposée entre la chambre de refoulement (222) et la conduite de refoulement (212), une première conduite d'aspiration (210) disposée entre l'accumulateur à basse pression (209) et la chambre de refoulement (222), une seconde conduite d'aspiration (213) disposée entre le réservoir d'agent de pression (202) et la chambre de refoulement (222), une valve de commutation (214) disposée dans la seconde conduite d'aspiration (213), une première valve d'aspiration (227) disposée entre l'accumulateur à basse pression (209) et la chambre de refoulement (222), et une seconde valve d'aspiration (231) disposée entre la valve de commutation (214) et la chambre de refoulement (222), caractérisé en ce que les deux valves d'aspiration (227, 231) sont disposées dans le boîtier de pompe (215).

2. Système hydraulique de freinage selon la revendication 1, caractérisé en ce que l'une (231, 331) des valves d'aspiration (227, 127 ; 231, 131) comporte un siège de valve (233, 133) fixe vis-à-vis du boîtier et en ce que l'autre valve d'aspiration (227, 127) présente son siège de valve (229, 129) disposé sur un piston (219) agencé de façon à pouvoir être déplacé en translation.

3. Système hydraulique de freinage selon la revendication 1 ou 2, caractérisé en ce que la chambre de refoulement (222, 122) est pour l'essentiel cylindrique et est délimitée à chacune de ses extrémités axiales par l'une, respective, des valves d'aspiration (227, 127 ; 231, 131).

4. Système hydraulique de freinage selon l'une des revendications précédentes, caractérisé en ce que l'obturateur (232, 132) de la seconde valve d'aspiration (231, 131) est soumis dans le sens de l'ouverture à la pression régnant dans la seconde conduite d'aspiration (213) sur une surface (diamètre D) plus grande que celle sur laquelle l'obturateur (228, 128) de la seconde valve d'aspiration (227, 127) est soumis à la pression régnant dans la première conduite d'aspiration (210).

5. Système hydraulique de freinage selon l'une des revendications précédentes, caractérisé en ce qu'un ressort de valve (138) est disposé entre les obturateurs (128, 132) des deux valves d'aspiration (127, 231) et applique une sollicitation sur les deux obturateurs (128, 132) dans le sens de la fermeture.

6. Système hydraulique de freinage selon la revendication 5, caractérisé en ce que l'obturateur (132) de la seconde valve d'aspiration (131) est soumis à la sollicitation d'un ressort de compression (139) qui exerce une action antagoniste vis-à-vis du ressort de valve (138) et est plus faible que ce dernier.

7. Système hydraulique de freinage selon l'une des revendications précédentes, caractérisé en ce que les obturateurs (128, 132) des deux valves d'aspiration (127, 131) sont des billes.

8. Système hydraulique de freinage selon l'une des revendications précédentes, comportant une pompe qui comprend un boîtier (1, 32), un alésage de boîtier (2) pour l'essentiel cylindrique, un piston de refoulement (3, 31) agencé de façon à pouvoir être déplacé en translation dans cet alésage de boîtier et au moins une valve d'aspiration (10, 33, 34) comportant un siège de valve (8, 39, 40), un obturateur (9, 37, 38) et un ressort de valve (16, 43), la précontrainte du ressort de valve (16, 43) variant en fonction de la position du piston de refoulement (3, 31), tandis que le piston de refoulement (3, 31) délimite une chambre de refoulement (21, 36) et comporte un point mort bas, pour lequel la chambre de refoulement (21, 36) présente son volume le plus grand, et un point mort haut pour lequel la chambre de refoulement (21, 36) présente son volume le plus petit, caractérisé en ce que, pour transmettre la force du ressort de valve (16, 43) à l'obturateur (9, 37, 38) de la valve d'aspiration (10, 33, 34), il est prévu plusieurs éléments formant leviers (14, 47), répartis à la périphérie et s'étendant chacun suivant une direction radiale, dont l'axe de basculement de chacun s'étend d'une manière tangentielle et qui, au voisinage du point mort haut, compriment le ressort de valve (16, 43).

9. Système hydraulique de freinage selon la revendication 8, caractérisé en ce que, vus de l'axe central de l'alésage (2), les éléments formant leviers (14, 47) présentent trois cercles d'appui, le cercle le plus petit étant soumis à la sollicitation du ressort de valve (16, 43), tandis que le cercle moyen prend appui sur une partie de butée (nervure de butée 12, 45) solidaire à demeure du siège de valve (8, 39, 40) et définit l'axe de basculement et que le cercle extérieur est soumis à une force variable qui dépend de la position du piston de refoulement (3, 31) et qui est antagoniste vis-à-vis du couple de bras de levier exercé sur les éléments formant levier (14, 47) par le ressort de valve (16, 43).

10. Système hydraulique de freinage selon la revendication 8 ou 9, caractérisé en ce que les éléments formant leviers (14, 47) sont reliés entre eux au moyen de parties de liaison (15, 48) qui sont disposées d'une manière tangentielle et qui maintiennent constants les espacements relatifs des éléments formant leviers (14, 47) suivant le contour périphérique.

11. Système hydraulique de freinage selon la revendication 10, caractérisé en ce que les éléments formant leviers (14, 47) et les parties de liaison (15, 48) sont réalisés d'une seule pièce sous forme d'un élément de transmission (13, 41, 42).

12. Système hydraulique de freinage selon la revendication 10, caractérisé en ce que l'élément de transmission (13, 41, 42) est façonné sous forme d'une pièce en tôle réalisée à l'emporte-pièce.

13. Système hydraulique de freinage selon l'une des revendications 1 à 12, comportant une pompe qui comprend un boîtier (1), un alésage de boîtier (2) pour l'essentiel cylindrique, un piston de refoulement (3) agencé de façon à pouvoir être déplacé en translation dans cet alésage de boîtier et au moins une valve d'aspiration (10) comportant un siège de valve (8), un obturateur (49) et un ressort de valve (16), la précontrainte du ressort de valve (16) variant en fonction de la position du piston de refoulement (3), tandis que le piston de refoulement (3) délimite une chambre de refoulement (21) et comporte un point mort bas, pour lequel la chambre de refoulement (21) présente son volume le plus grand, et un point mort haut pour lequel la chambre de refoulement (21) présente son volume le plus petit, caractérisé en ce qu'il est prévu des moyens qui sont aptes à exercer sur l'obturateur (49) une force qui est antagoniste vis-à-vis de la force exercée par le ressort de valve (16) pendant la course d'aspiration du piston de refoulement (3).

14. Système hydraulique de freinage selon la revendication 13, caractérisé en ce que lesdits moyens sont formés d'un élément de friction (54) qui est disposé entre l'obturateur (49) et une pièce (51) qui n'est pas entraînée par le piston de refoulement (3).

15. Système hydraulique de freinage selon la revendication 13, caractérisé en ce que lesdits moyens sont formés d'un corps (55) de forme aérodynamique qui est solidaire de l'obturateur (42).

16. Système hydraulique de freinage selon la revendication 13, caractérisé en ce que lesdits moyens sont formés d'un corps d'inertie (60) solidaire de l'obturateur (49).

17. Système hydraulique de freinage selon la revendication 16, caractérisé en ce que la masse du corps d'inertie (60) est adaptée au régime nominal d'un moteur entraînant la pompe.
